# EUROPÄISCHE PATENTSCHRIFT

(11) **EP 2 655 979 B1**
(45) Veröffentlichungstag und Bekanntmachung des Hinweises auf die Patenterteilung: **13.04.2016**
(21) Anmeldenummer: 11799727.0
(22) Anmeldetag: 23.12.2011
(51) Int. Cl.: F24D 19/10, G05D 23/19

(54) **VERFAHREN ZUR REGELUNG EINES WÄRMEERZEUGERS EINES HEIZSYSTEMS UND HEIZSYSTEM**
METHOD FOR CONTROLLING A HEAT GENERATOR OF A HEATING SYSTEM, AND HEATING SYSTEM
PROCÉDÉ DE RÉGULATION D'UN GÉNÉRATEUR DE CHALEUR D'UN SYSTÈME DE CHAUFFAGE ET SYSTÈME DE CHAUFFAGE

(30) Priorität: 24.12.2010 DE 102010056256
(43) Veröffentlichungstag der Anmeldung: 30.10.2013
(73) Patentinhaber: Robert Bosch GmbH, 70442 Stuttgart (DE)
(72) Erfinder: STUMPP, Hermann, 73730 Esslingen (DE)
(86) Internationale Anmeldenummer: PCT/EP2011/073909
(87) Internationale Veröffentlichungsnummer: WO 2012/085260

(56) Entgegenhaltungen:
- EP-A1- 0 065 071
- EP-A1- 0 280 752
- EP-A2- 0 119 313
- EP-A2- 1 235 130
- DE-A1- 4 203 613

## Beschreibung

Die Erfindung betrifft ein Verfahren zur Regelung eines Heizsystems mit einem Wärmeerzeuger, mit automatischer Erkennung einer Fensteröffnung gemäß dem Oberbegriff des Anspruchs 1 sowie ein entsprechend ausgestattetes Heizsystem.

Derartige Verfahren sind grundsätzlich bekannt (DE 42 03 613 A1) und dienen dazu, den Energieverbrauch eines Heizsystems bei der Fensteröffnung in einem zu beheizenden Raum auf ein Minimum zu reduzieren. Nachteilig bei den bekannten Verfahren ist es, dass diese zwar bei der Erkennung der Fensteröffnung eine entsprechende Regelveränderung des Wärmeerzeugers des Heizsystems durchführen, jedoch die in dem zu beheizenden Raum gespeicherte Wärme unberücksichtigt lassen. Dies führt dazu, dass nach dem Schließen des Fensters zum einen der Wärmeerzeuger mit sehr hoher und sogar höchster Heizstufe heizt, um den zu beheizenden Raum wieder auf die Raumsolltemperatur zu bringen. Darüber hinaus befindet sich in dem zu beheizenden Raum, durch die Wärmespeicherung in Böden, Wänden und Einrichtungsgegenständen noch soviel Wärme, die an den Raum abgegeben wird, dass ein sehr schnelles Erwärmen des zu beheizenden Raum stattfindet und insbesondere durch die Volllast des Wärmeerzeugers des Heizsystems ein Überschwingen der Raumisttemperatur stattfindet. Mit anderen Worten wird unnötig stark geheizt und damit eine zu hohe Raumisttemperatur erzeugt.

Aufgabe der vorliegenden Erfindung ist es die voranstehend erläuterten Nachteile bekannter Verfahren zu lösen. Insbesondere ist es Aufgabe der vorliegenden Erfindung die Effizienz bei der Regelung eines Wärmeerzeugers eines Heizsystems in einfacher und kostengünstiger Weise zu erhöhen.

Voranstehende Aufgabe wird gelöst durch ein Verfahren mit den Merkmalen des unabhängigen Anspruches 1 sowie durch ein Heizsystem mit den Merkmalen des unabhängigen Anspruches 6. Vorteilhafte Ausführungsformen ergeben sich unter anderem aus den an die jeweiligen unabhängigen Ansprüche anschließenden Unteransprüchen.

Bei einem erfindungsgemäßen Verfahren zur Regelung eines Heizsystems mit einem Wärmeerzeuger in einem Heizsystem, mit automatischer Erkennung einer Fensteröffnung für eine Regelvorrichtung zur Beheizung von mindestens einem Raum sind die folgenden Schritte vorgesehen:
- Vorgeben einer Raumsolltemperatur für den zu beheizenden Raum,
- Bestimmen der Raumisttemperatur in dem zu beheizenden Raum,
- Vergleich der Raumisttemperatur und der Raumsolltemperatur des zu beheizenden Raums.

Wenn die Raumisttemperatur unterhalb der Raumsolltemperatur des zu beheizenden Raumes liegt, sind weitere Schritte:
- Überwachen des Verlaufs der Raumisttemperatur des zu beheizenden Raumes und Berechnen des zugehörigen Gradienten,
- Erkennen der Fensteröffnung, wenn der Gradient der Raumisttemperatur des zu beheizenden Raumes negativ und kleiner als ein vordefinierter erster Grenzwert ist,
- Bei erkannter Fensteröffnung, Verwenden der letztmalig vor der erkannten Fensteröffnung gemessenen Raumisttemperatur des zu beheizenden Raumes für die Regelung des Heizsystems und/oder des Wärmeerzeugers.

Zusammenfassend kann gesagt werden, dass bei einem erfindungsgemäßen Verfahren die Raumisttemperatur eines zu beheizenden Raumes überwacht wird und ständig mit der Raumsolltemperatur verglichen wird. Teil dieser Überwachung ist es, bei einem Absinken der Raumisttemperatur unter die Raumsolltemperatur darüber hinaus den zugehörigen Gradienten des Absinkens zu berechnen. Damit wird sozusagen die Steigung der Temperaturlinie der Raumisttemperatur überwacht. Wird der Gradient negativ, so sinkt die Raumisttemperatur und je steiler die negative Steigung der entsprechenden Temperaturkurve der Raumisttemperatur ist, umso wahrscheinlicher ist es, dass ein Temperatursturz durch das Öffnen eines Fensters erzeugt worden ist. Liegt eine derartige Steigungssituation vor, so wird die Fensteröffnung als solche erkannt, sodass für die weitere Regelung des Wärmeerzeugers nicht mehr die aktuelle Raumisttemperatur sondern vielmehr die vor der erkannten Fensteröffnung letztmalig gemessene Raumisttemperatur für die Regelung des Wärmeerzeugers verwendet wird. Auf diese Weise wird verhindert, dass zum Zeitpunkt eines geöffneten Fensters der Wärmeerzeuger mit hoher Leistung gefahren wird, um den zu beheizenden Raum wieder aufzuheizen. Vielmehr wartet die Regelung des Wärmeerzeugers ab und vermeidet auf diese Weise unnötig hohen Energieaufwand für die Wiederbeheizung des zu beheizenden Raumes. Insbesondere kann auf diese Weise auch die in dem Raum gespeicherte Wärme, also Wärme die in dem Fußboden, den Wänden und Einrichtungsgegenständen des zu beheizenden Raumes gespeichert ist, für die Wiederaufheizung des Raumes vorrangig Verwendung finden.

Es kann von Vorteil sein, wenn bei einem erfindungsgemäßen Verfahren nach der Erkennung der Fensteröffnung in dem zu beheizenden Raum der Verlauf der Raumisttemperatur sowie der zugehörige Gradient weiter überwacht werden und die Fensterschließung erkannt wird, wenn der Gradient Null oder positiv und größer als ein vordefinierter zweiter Grenzwert ist. Dabei wird für die Regelung des Wärmeerzeugers jedoch weiter die letztmalig vor der erkannten Fensteröffnung gemessene Raumisttemperatur des zu beheizenden Raumes verwendet. Durch die weitergehende Überwachung des Gradienten der Raumisttemperatur kann, wie voranstehend beschrieben, die Schließung des Fensters erkannt werden.

Wird ein Fenster eines zu beheizenden Raumes geschlossen, so wird der Temperatursturz sich abbremsen und die Raumisttemperatur ein Minimum durchschreiten. Anschließend wird der Raum beginnen sich zu erwärmen. Die Erwärmung wird dabei zum einen aus der Wärme zur Verfügung gestellt, die von dem Wärmeerzeuger des Heizsystems in den zu beheizenden Raum eingebracht wird, wobei dieser Wärmeerzeuger weiter mit der letztmalig vor der erkannten Fensteröffnung gemessenen Raumisttemperatur geregelt wird. Darüber hinaus wird Wärme, die in Einrichtungsgegenständen, dem Boden und den Wänden des zu beheizenden Raumes gespeichert ist, die Wiederaufheizung des zu beheizenden Raumes unterstützen.

Ein entscheidender Unterschied zu bekannten Verfahren ist hier, dass trotz der erkannten Fensterschließung die Regelung des Wärmeerzeugers des Heizsystems unangetastet bleibt. Das bedeutet, dass auch nach erkannter Fensterschließung weiter keine Änderung der Regelung des Wärmeerzeugers stattfindet, sondern vielmehr weiter die letztmalig vor der erkannten Fensteröffnung gemessene Raumisttemperatur des zu beheizenden Raumes für die Regelung verwendet wird. Der Wärmeerzeuger heizt also weiter mit konstanter Leistung, sodass die in dem Boden, den Wänden und den Einrichtungsgegenständen des zu beheizenden Raumes gespeicherte Wärme an den Raum abgegeben werden kann und diese Abgabe für die Wiederaufheizung in einem erfindungsgemäßen Verfahren abgewartet wird. Auf diese Weise kann einerseits unnötig hoher Energieverbrauch für den Wärmeerzeuger vermieden werden, und darüber hinaus die Wahrscheinlichkeit eines Überschwingens der Raumisttemperatur über die vorgegebene Raumsolltemperatur reduziert werden.
Es kann von Vorteil sein, wenn bei einem erfindungsgemäßen Verfahren nach der Erkennung der Fensteröffnung in dem zu beheizenden Raum der Verlauf der Raumisttemperatur sowie der zugehörige Gradient weiter überwacht werden und die aktuelle Raumisttemperatur des zu beheizenden Raumes wieder für die Regelung des Wärmeerzeugers verwendet wird, sobald der Gradient nach erkannter Fensterschließung weiter angestiegen ist und anschließend wieder unter einen vordefinierten Grenzwert gefallen ist. Mit anderen Worten wird nach der Fensterschließung weiter abgewartet, wie lange der Raum sich durch die gespeicherte Wärme in Boden, Wänden und Einrichtungsgegenständen des zu beheizenden Raumes sich sozusagen von selbst aufheizt. Erst wenn diese Wärmequelle versiegt ist, wird die Regelung des Wärmeerzeugers sich wieder aktiv einschalten und den aktuellen Wert der Raumisttemperatur für die Regelung des Wärmeerzeugers verwenden. Mit anderen Worten wird während der Zeit der Aufheizung durch die gespeicherte Wärme in Boden, Wänden und Einrichtungsgegenständen des zu beheizenden Raumes keine veränderte aktive Zuheizung durch den Wärmeerzeuger erfolgen. Auf diese Weise wird die Effizienz des Wärmeerzeugers noch weiter gesteigert und darüber hinaus sichergestellt, dass zum Zeitpunkt des Abklingens des weiteren Aufheizens durch die im Raum gespeicherte Wärme der Wärmeerzeuger durch die Anpassung der Regelung wieder den aktuellen Wert für die Raumisttemperatur für die Wärmeerzeugung erhält.

Ebenfalls vorteilhaft ist es, wenn bei einem erfindungsgemäßen Verfahren die Dauer zwischen Erkennung der Fensteröffnung für den zu beheizenden Raum und der Erkennung der Fensterschließung eine maximale Öffnungsdauer definiert ist. Die Vordefinition einer solchen maximalen Öffnungsdauer dient dazu, dass für besonders lange Fensteröffnungsphasen die Regelung eines Wärmeerzeugers entsprechend reagieren kann. Damit ist es möglich, bei der Lüftung eines zu beheizenden Raumes zwischen einem zu empfehlenden Stoßlüften einerseits und einem vollständigen, insbesondere einem langwierigen Luftaustausch in dem zu beheizenden Raum andererseits zu unterscheiden. Je nach Regelungsvorgabe kann es dabei von Vorteil sein, wenn nach der Erkennung der Fensteröffnung und Überschreiten der maximalen Öffnungsdauer unabhängig vom berechneten Gradienten der Raumisttemperatur des zu beheizenden Raumes die aktuelle Raumisttemperatur des zu beheizenden Raumes wieder für die Regelung des Wärmeerzeugers verwendet wird. Wird also ein Fenster länger geöffnet, als dies in der maximalen Öffnungsdauer in einem erfindungsgemäßen Verfahren vordefiniert ist, so wird zur Vermeidung eines zu langen notwendigen Aufheizens nach der zu erwartenden Fensterschließung, die Raumisttemperatur des Raumes wieder zur Regelung verwendet, sodass der Wärmeerzeuger den Raum wieder beginnt aufzuheizen obwohl das Fenster möglicherweise noch offen steht. Dies dient dazu, trotz eines damit verbundenen erhöhten Energiebedarfs, das vollständige Auskühlen des zu beheizenden Raumes zu verhindern und die Zeit für das Wiederaufheizen des zu beheizenden Raumes auf die gewünschte und vorgegebene Raumsolltemperatur auf ein Maximum zu beschränken.

Ein weiterer Gegenstand der vorliegenden Erfindung ist ein Heizsystem für die Beheizung von mindestens einem Raum, aufweisend einen Wärmeerzeuger, mindestens einen Temperatursensor für die Bestimmung der Raumisttemperatur in dem zu beheizenden Raum und eine Regelung für die Regelung der Vorlauftemperatur des Wärmeerzeugers. Die Regelvorrichtung ist dabei für die Ausführung eines erfindungsgemäßen Verfahrens geeignet. Ein erfindungsgemäßes Heizsystem weist daher die gleichen Vorteile auf, wie sie ausführlich mit Bezug auf ein erfindungsgemäßes Verfahren erläutert worden sind.

Ein erfindungsgemäßes Heizsystem kann vorteilhafterweise dahingehend weitergebildet sein, dass nach Erkennung der Fensteröffnung in dem zu beheizenden Raum die Regelvorrichtung die vor der Erkennung der Fensteröffnung letztmalig bestimmte Raumisttemperatur zur Vorgabe der Vorlauftemperatur des Wärmeerzeugers verwendet. Die Vorlauftemperatur des Wärmeerzeugers für den Heizkörper kann auch reduziert werden während der Fensteröffnung nicht unnötig Wärme in den Raum einzubringen. Auch ist es möglich, dass der Wärmeerzeuger nach Erkennung der Fensteröffnung in einen passiven Betriebsmodus versetzt wird. Insbesondere für Heizsysteme, bei welchen die Energieeinsparung maximiert werden soll, ist es vorteilhaft, wenn die Vorlauftemperatur des Wärmeerzeugers für einen Heizkörper reduziert oder der Wärmeerzeuger in einen passiven Betriebsmodus versetzt wird, wenn die Fensteröffnung erkannt worden ist. Auf diese Weise wird verhindert, dass zu einem Zeitpunkt, zu dem ein starker Wärmeaustrag aus dem zu beheizenden Raum zu erwarten ist, der Wärmeerzeuger Wärme in denselben einträgt.

Jedoch ist unabhängig von der exakten Betriebsweise sichergestellt, dass kein unnötig starkes Heizen zum Zeitpunkt der Fensteröffnung und daran anschließend stattfinden wird.

Bei einem erfindungsgemäßen Heizsystem kann es weiter vorteilhaft sein, wenn nach der Erkennung der Fensteröffnung in dem zu beheizenden Raum der Verlauf der Raumisttemperatur sowie der zugehörige Gradient weiter überwacht werden. Die Regelvorrichtung verwendet die aktuelle Raumisttemperatur des zu beheizenden Raumes wieder für die Regelung der Vorlauftemperatur des Wärmeerzeugers, sobald der Gradient nach erkannter Fensterschließung wieder angestiegen ist und anschließend wieder unter einen vordefinierten Grenzwert gefallen ist.
Im Rahmen der vorliegenden Erfindung sind die Grenzwerte, also der erste Grenzwert für die Erkennung der Fensteröffnung, der zweite Grenzwert für die Erkennung der Fensterschließung und der dritte Grenzwert für die Wiederverwendung der aktuellen Raumisttemperatur für die Regelung der Wärmeerzeugung, als Steigungsgrenzwerte zu verstehen, mit welchen das tatsächliche Verhalten eines erfindungsgemäßen Heizsystems sowie einer erfindungsgemäßen Verfahrensanweisung beeinflusst werden kann.

Die vorliegende Erfindung wird näher erläutert anhand der beigefügten Zeichnungsfiguren. Die dabei verwendeten Begriffe "links", "rechts", "oben" und "unten" beziehen sich dabei auf eine Ausrichtung der Zeichnungsfiguren mit normal lesbaren Bezugszeichen. Es zeigen:
- Figur 1: schematisch eine erste Ausführungsform der vorliegenden Erfindung
- Figur 2a: schematisch den Verlauf der Temperatur in einem zu beheizenden Raum während einer Fensteröffnung
- Figur 2b: den Verlauf des Gradienten der Raumisttemperatur gemäß einem Temperaturverlauf der Figur 2a.

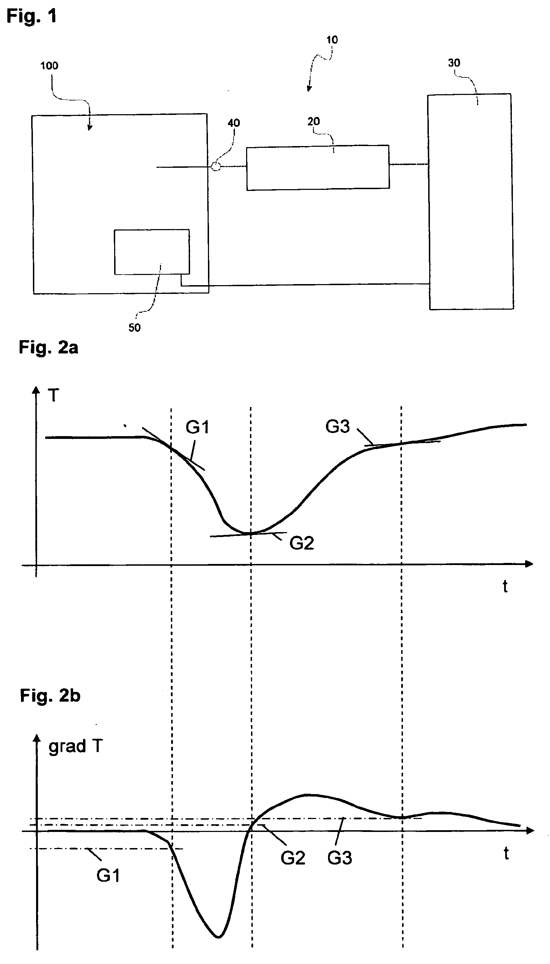

In Figur 1 ist eine Ausführungsform eines erfindungsgemäßen Heizsystems 10 dargestellt. Dieses dient schematisch dargestellt zur Beheizung eines zu beheizenden Raumes 100, wobei selbstverständlich auch mehrere zu beheizende Räume 100 vorgesehen sein können. In jedem der zu beheizenden Räume 100 ist ein Heizkörper 50 vorgesehen, der über einen Vorlauf und einen Rücklauf in Kontakt mit dem Wärmeerzeuger 30 steht. Der Wärmeerzeuger 30 stellt also eine Vorlauftemperatur zur Verfügung, welche in den Heizkörper 50 strömt, von welchem Wärme in den zu beheizenden Raum 100 abgegeben wird. Das dadurch abgekühlte Heizfluid strömt als Rücklauf zurück zum Wärmeerzeuger 30 und wird von diesem wieder auf die Vorlaufsolltemperatur erwärmt, sodass der Kreislauf von Neuem starten kann.

Weiter ist bei dem Heizsystem 10 der Ausführungsform der Figur 1 eine Regelvorrichtung 20 vorgesehen, welche in Regelverbindung sowohl mit dem Wärmeerzeuger 30, als auch mit einem Temperatursensor 40 steht. Der Temperatursensor 40 ist in der Lage die Raumisttemperatur des zu beheizenden Raumes 100 zu bestimmen und der Regelvorrichtung 20 mitzuteilen. In Abhängigkeit der gemessenen Temperatur des Temperatursensors 40 wird die Regelvorrichtung 20 ein erfindungsgemäßes Verfahren ausführen.

Ein solches erfindungsgemäßes Verfahren soll beispielhaft anhand der Temperatur- und Gradientenverläufe der Figuren 2a und 2b nachfolgend näher erläutert werden. In Figur 2a ist beispielhaft der Temperaturverlauf T bei der Fensteröffnung in einem zu beheizenden Raum 100 dargestellt und über der Zeit t aufgetragen. Zu Beginn, also am Start der Temperaturkurve aufgetragen über der Zeit, befindet sich die Temperatur T in dem zu beheizenden Raum auf einem im Wesentlichen konstanten Wert in der Nähe der Raumsolltemperatur. Wird nun das Fenster geöffnet, so strömt kalte Luft in den zu beheizenden Raum und die Raumisttemperatur beginnt abzusinken. Dies ist in der Kurve der Figur 2a dadurch zu erkennen, dass die Temperatur über der Zeit deutlich fällt und die negative Steigung der Temperaturkurve, also deren Gefälle, zunimmt. Durch die Änderung der Steigung, insbesondere durch das Ausbilden eines negativen Gradienten, kann die Fensteröffnung erkannt werden.

In einem erfindungsgemäßen Verfahren wird für diese Erkennung zusätzlich zu dem Verlauf der Temperaturkurve, wie in Figur 2a dargestellt, auch der Verlauf des Gradienten grad T der Temperatur T überwacht, wie er in Figur 2b dargestellt ist. Zu Beginn der Temperaturkurve im zu beheizenden Raum, also bei im Wesentlichen konstanter Raumisttemperatur ist der Gradient auch im Wesentlichen gleich Null. Wird durch die Fensteröffnung die Raumisttemperatur gesenkt, so fällt auch der Gradient ins Negative, insbesondere unter einen ersten vordefinierten Grenzwert G1, welcher mit einer ersten gestrichelten Linie unterhalb der Zeitkurve im Negativen angedeutet ist. Zu diesem Zeitpunkt wird durch die Veränderung des Temperaturgradienten der Raumisttemperatur die Erkennung der Fensteröffnung möglich. Erfindungsgemäß muss zusätzlich das Kriterium erfüllt sein, dass die Raumisttemperatur unter die Raumsolltemperatur gefallen ist. Nach erkannter Fensteröffnung wird jedoch weiter die Raumisttemperatur für die Regelung des Wärmeerzeugers 20 verwendet, welche vor der Erkennung der Fensteröffnung letztmalig gemessen worden ist.

Sinkt nun während der Fensteröffnung die Temperatur weiter ab, so geschieht keine Änderung im Regelverhalten des Heizsystems 10, insbesondere des Wärmeerzeugers 30. Wird das Fenster wieder geschlossen, so ist der Wärmeentzug aus dem zu beheizenden Raum 100 gestoppt, sodass dieser sich wieder erwärmen kann. Vor der Erwärmung wird die Temperaturabnahme abgebremst und ein Minimum der Raumisttemperatur erreicht und durchschritten. Dies ist in der Temperaturkurve T als Talsohle und in der Kurve des Gradienten der Raumisttemperatur als Schnittpunkt der Gradientenkurve mit der Zeitachse zu erkennen (Wert des Gradienten ist 0). Anschließend wird die Temperatur des zu beheizenden Raumes 100 beginnen leicht anzusteigen, sodass der Gradient ebenfalls leicht ins Positive geht. Zu diesem Zeitpunkt, also bei Überschreiten eines zweiten vordefinierten Grenzwertes G2 für den Gradienten der Raumisttemperatur des zu beheizenden Raumes 100 wird die Fensterschließung erkannt. Die Fensterschließung wird jedoch für die Regelung des Wärmeerzeugers 20 nur als Erkennung verwendet (registriert) und ändert nichts an der Vorgabe der Vorlauftemperatur des Wärmeerzeugers 30, für dessen Bestimmung immer noch die Raumisttemperatur Verwendung findet, welche vor der Erkennung des Fensteröffnens letztmalig gemessen worden ist.

Durch Wärme, die im zu beheizenden Raum, insbesondere in Boden, Wänden und Einrichtungsgegenständen des zu beheizenden Raumes gespeichert ist, wird der Raum sich durch Wärmeabgabe von diesen Komponenten wieder erwärmen (passive Erwärmung). Die Wiedererwärmungstemperatur wird sich dabei - zumindest bei relativ kurzer Fensteröffnung - jener Raumisttemperatur annähern, die letztmalig vor dem Öffnen des Fensters gemessen worden ist. Diese Wiedererwärmung des Raumes aus den Wärme speichernden Komponenten Boden, Wände, Decke, usw., ohne besondere Zuheizung seitens des Heizungssystems bzw. des Wärmeerzeugers, wird bewusst angestrebt. Die Regelung des Wärmeerzeugers 30 wird während dieser Phase nicht verändert, sodass weiter jene Raumisttemperatur für die Regelung des Wärmeerzeugers 30 verwendet wird, die letztmalig vor der Erkennung der Fensteröffnung gemessen worden ist. Erst nachdem die Erwärmung des Raumes durch darin enthaltene Komponenten wie Boden, Wände oder Einrichtungsgegenstände im Wesentlichen abgeschlossen ist, wird die Regelung des Wärmeerzeugers 30 durch die Regelvorrichtung 20 geändert und die aktuelle Raumisttemperatur wieder der Regelung zu Grunde gelegt. Dies geschieht dann, wenn der Temperaturanstieg abgebremst wird, also keine weitere Erwärmung ohne Änderung der Regelung des Wärmeerzeugers 30 stattfinden kann.

Dies wird durch ein erfindungsgemäßes Verfahren dadurch erkannt, dass der Gradient der Raumisttemperatur, in Figur 2b aufgetragen, nach Erreichen eines Maximalwerts wieder abnimmt und unter einen vordefinierten dritten Grenzwert G3 fällt. Dieser dritte Grenzwert hat einen sehr kleinen Wert oder den Wert Null, wodurch sichergestellt ist, dass die passive Erwärmung des Raumes im Wesentlichen abgeschlossen ist. Zu diesem Zeitpunkt wird also der Anstieg der Temperatur immer schwächer werden, ggf. bis er praktisch nicht mehr messbar ist. Erst zu diesem Zeitpunkt wird die Regelvorrichtung 20 in die Beheizung des zu beheizenden Raumes 100 derart eingreifen, dass zu diesem Zeitpunkt wieder die aktuelle Raumisttemperatur des zu beheizenden Raumes 100 für die Regelung des Wärmeerzeugers 30 verwendet wird. Dadurch, dass während der Zeit, welche zwischen der Unterschreitung des ersten vordefinierten Grenzwertes und dem Unterschreiten des dritten vordefinierten Grenzwertes für den Gradienten der Raumisttemperatur des zu beheizenden Raumes 100, die Raumisttemperatur für die Regelung des Wärmeerzeugers 30 verwendet wird, die letztmalig vor der Erkennung der Fensteröffnung gemessen worden ist, kann sowohl die Effizienz in der Beheizung und im Betrieb des Wärmeerzeugers 30 gesteigert und darüber hinaus ein ungewolltes Überschwingen der Raumisttemperatur über die Raumsolltemperatur verhindert werden.

## Patentansprüche

1. Verfahren zur Regelung eines Heizsystems (10) mit einem Wärmeerzeuger (30), mit automatischer Erkennung einer Fensteröffnung für eine Regelvorrichtung (20) zur Beheizung von mindestens einem Raum (100), aufweisend die folgenden Schritte:
• Vorgeben einer Raumsolltemperatur für den zu beheizenden Raum (100),
• Bestimmen der Raumisttemperatur in dem zu beheizenden Raum (100),
• Vergleich der Raumisttemperatur und der Raumsolltemperatur des zu beheizenden Raums (100),
wobei wenn die Raumisttemperatur unterhalb der Raumsolltemperatur des zu beheizenden Raumes (100) liegt, folgende weitere Schritte umfasst sind
• Überwachen des Verlaufs der Raumisttemperatur des zu beheizenden Raums (100) und Berechnen des zugehörigen Gradienten,
• Erkennen der Fensteröffnung, wenn der Gradient der Raumisttemperatur des zu beheizenden Raumes (100) negativ und kleiner als ein vordefinierter erster Grenzwert ist,
**dadurch gekennzeichnet, dass**
• bei erkannter Fensteröffnung, Verwenden der letztmalig vor der erkannten Fensteröffnung gemessenen Raumisttemperatur des zu beheizenden Raumes (100) für die Regelung des Heizsystems und/oder des Wärmeerzeugers (30).

2. Verfahren nach Anspruch 1,
**dadurch gekennzeichnet, dass** nach der Erkennung der Fensteröffnung in dem zu beheizenden Raum (100) der Verlauf der Raumisttemperatur sowie der zugehörige Gradient weiter überwacht werden und eine Fensterschließung erkannt wird, wenn der Gradient null ist oder positiv und größer als ein vordefinierter zweiter Grenzwert ist, wobei für die Regelung des Wärmeerzeugers (30) weiter die letztmalig vor der erkannten Fensteröffnung gemessene Raumisttemperatur des zu beheizenden Raumes (100) verwendet wird.

3. Verfahren nach Anspruch 2,
**dadurch gekennzeichnet, dass** nach der Erkennung der Fensteröffnung in dem zu beheizenden Raum (100) der Verlauf der Raumisttemperatur sowie der zugehörige Gradient weiter überwacht werden und die aktuelle Raumisttemperatur des zu beheizenden Raumes (100) wieder für die Regelung des Wärmeerzeugers (30) verwendet wird, sobald der Gradient nach erkannter Fensterschließung weiter angestiegen ist und anschließend wieder unter einen vordefinierten dritten Grenzwert gefallen ist.

4. Verfahren nach einem der Ansprüche 1 bis 3,
**dadurch gekennzeichnet, dass** für die Dauer zwischen Erkennung der Fensteröffnung für den zu beheizenden Raum (100) und der Erkennung der Fensterschließung eine maximale Öffnungsdauer vordefiniert ist.

5. Verfahren nach Anspruch 4,
**dadurch gekennzeichnet, dass** nach Erkennung der Fensteröffnung und Überschreiten der maximalen Öffnungsdauer unabhängig vom berechneten Gradienten der Raumisttemperatur des zu beheizenden Raums (100) die aktuelle Raumisttemperatur des zu beheizenden Raumes (100) wieder für die Regelung des Wärmeerzeugers (30) verwendet wird.

6. Heizsystem (10) für die Beheizung von mindestens einem Raum (100), aufweisend einen Wärmeerzeuger (30),
mindestens einen Temperatursensor (40) für die Bestimmung der Raumisttemperatur in dem zu beheizenden Raum (100), und
eine Regelvorrichtung (20) für die Regelung der Vorlauftemperatur des Heizsystems oder des Wärmeerzeugers (30), die für die Ausführung eines Verfahrens mit den Merkmalen eines der Ansprüche 1 bis 5 eingerichtet ist.

7. Heizsystem (10) nach Anspruch 6,
**dadurch gekennzeichnet, dass** nach der Erkennung der Fensteröffnung in dem zu beheizenden Raum (100) die Regelvorrichtung (20) die vor der Erkennung der Fensteröffnung letztmalig bestimmte Raumisttemperatur zur Vorgabe der Vorlauftemperatur des Heizsystems oder des Wärmeerzeugers (30) verwendet oder die Vorlauftemperatur für einen Heizkörper (50) reduziert oder den Wärmeerzeuger (30) in einen passiven Betriebsmodus versetzt.

8. Heizsystem (10) nach einem der Ansprüche 6 oder 7,
**dadurch gekennzeichnet, dass** nach der Erkennung der Fensteröffnung in dem zu beheizenden Raum (100) der Verlauf der Raumisttemperatur sowie der zugehörige Gradient weiter überwacht werden und die Regelvorrichtung (20) die aktuelle Raumisttemperatur des zu beheizenden Raumes (100) wieder für die Regelung der Vorlauftemperatur des Heizsystems oder des Wärmeerzeugers (30) verwendet, sobald der Gradient nach erkannter Fensterschließung weiter angestiegen ist und anschließend wieder unter einen vordefinierten dritten Grenzwert gefallen ist.

## Claims

1. Method for controlling a heating system (10) comprising a heat generator (30), with automatic detection of a window being opened, intended for a control device (20) for heating at least one room (100) and having the following steps:
• specifying a setpoint room temperature for the room (100) to be heated,
• determining the actual room temperature in the room (100) to be heated,
• comparing the actual room temperature and the setpoint room temperature of the room (100) to be heated,
the following further steps being comprised if the actual room temperature lies below the setpoint room temperature of the room (100) to be heated
• monitoring the variation in the actual room temperature of the room (100) to be heated and calculating the associated gradient,
• detecting the opening of a window if the gradient of the actual room temperature of the room (100) to be heated is negative and less than a predefined first limit value,
**characterized in that**
• when the opening of a window is detected, using the actual room temperature of the room (100) to be heated that was measured last before the detected opening of a window for the control of the heating system and/or the heat generator (30).

2. Method according to Claim 1,
**characterized in that**, after the detection of the opening of a window in the room (100) to be heated, the variation of the actual room temperature and the associated gradient continue to be monitored and a window being closed is detected if the gradient is zero or positive and greater than a predefined second limit value, the actual room temperature of the room (100) to be heated that was measured last before the detected opening of a window continuing to be used for the control of the heat generator (30).

3. Method according to Claim 2,
**characterized in that**, after the detection of the opening of a window in the room (100) to be heated, the variation of the actual room temperature and the associated gradient continue to be monitored and the actual room temperature at the time of the room (100) to be heated is used again for the control of the heat generator (30) as soon as the gradient has risen further after a detected closing of a window and subsequently fallen again below a predefined third limit value.

4. Method according to one of Claims 1 to 3,
**characterized in that** a maximum opening time is predefined for the period between detection of the opening of a window for the room (100) to be heated and the detection of the closing of a window.

5. Method according to Claim 4,
**characterized in that**, after detection of the opening of a window and exceeding of the maximum opening time, the actual room temperature at the time of the room (100) to be heated is used again for the control of the heat generator (30) irrespective of the calculated gradient of the actual room temperature of the room (100) to be heated.

6. Heating system (10) for the heating of at least one room (100), having
a heat generator (30),
at least one temperature sensor (40) for the determination of the actual room temperature in the room (100) to be heated, and
a control device (20) for the control of the flow temperature of the heating system or the heat generator (30), which is designed for performing a method with the features of one of Claims 1 to 5.

7. Heating system (10) according to Claim 6,
**characterized in that**, after the detection of the opening of a window in the room (100) to be heated, the control device (20) uses the actual room temperature determined last before the detection of the opening of a window for specifying the flow temperature of the heating system or of the heat generator (30) or reduces the flow temperature for a radiator (50) or puts the heat generator (30) into a passive operating mode.

8. Heating system (10) according to either of Claims 6 and 7,
**characterized in that**, after the detection of the opening of a window in the room (100) to be heated, the variation of the actual room temperature and the associated gradient continue to be monitored and the control device (20) again uses the actual room temperature at the time of the room (100) to be heated for the control of the flow temperature of the heating system or of the heat generator (30) as soon as the gradient has risen further after a detected closing of a window and subsequently fallen again below a predefined third limit value.

## Revendications

1. Procédé de régulation d'un système de chauffage (10) avec un générateur de chaleur (30), avec reconnaissance automatique d'une ouverture de fenêtre pour un dispositif de régulation (20) pour le chauffage d'au moins un local (100), présentant les étapes suivantes:
• définir une température de consigne du local pour le local à chauffer (100),
• déterminer la température réelle du local dans le local à chauffer (100),
• comparer la température réelle du local et la température de consigne du local pour le local à chauffer (100),
dans lequel, lorsque la température réelle du local est inférieure à la température de consigne du local pour le local à chauffer (100), les étapes suivantes sont comprises:
• surveiller l'évolution de la température réelle du local dans le local à chauffer (100) et calculer le gradient correspondant,
• reconnaître l'ouverture de fenêtre, lorsque le gradient de la température réelle du local dans le local à chauffer (100) est négatif et inférieur à une première valeur limite prédéfinie,
**caractérisé en ce que**
• lorsque l'ouverture de fenêtre est reconnue, utiliser la température réelle du local dans le local à chauffer (100) mesurée pour la dernière fois avant l'ouverture de fenêtre reconnue pour la régulation du système de chauffage et/ou du générateur de chaleur (30).

2. Procédé selon la revendication 1, **caractérisé en ce que**, après la reconnaissance de l'ouverture de fenêtre dans le local à chauffer (100), on surveille encore l'évolution de la température réelle du local ainsi que le gradient correspondant et on reconnaît une fermeture de fenêtre, lorsque le gradient est nul ou positif et supérieur à une deuxième valeur limite prédéfinie, dans lequel on utilise ensuite pour la régulation du générateur de chauffage (30) la température réelle du local dans le local à chauffer (100) mesurée pour la dernière fois avant l'ouverture de fenêtre reconnue.

3. Procédé selon la revendication 2, **caractérisé en ce que**, après la reconnaissance de l'ouverture de fenêtre dans le local à chauffer (100), on surveille encore l'évolution de la température réelle du local ainsi que le gradient correspondant et on utilise ensuite pour la régulation du générateur de chaleur (30) la température réelle actuelle du local dans le local à chauffer (100), dès que le gradient a ensuite augmenté après la fermeture de fenêtre reconnue puis est de nouveau redescendu en dessous d'une troisième valeur limite prédéfinie.

4. Procédé selon l'une quelconque des revendications 1 à 3, **caractérisé en ce qu'**une durée d'ouverture maximale est prédéfinie pour la durée entre la reconnaissance de l'ouverture de fenêtre pour le local à chauffer (100) et la reconnaissance de la fermeture de fenêtre.

5. Procédé selon la revendication 4, **caractérisé en ce que**, après la reconnaissance de l'ouverture de fenêtre et le dépassement de la durée d'ouverture maximale indépendamment du gradient calculé de la température réelle du local dans le local à chauffer (100), on utilise de nouveau la température réelle actuelle du local dans le local à chauffer (100) pour la régulation du générateur de chaleur (30).

6. Système de chauffage (10) pour le chauffage d'au moins un local (100), présentant
un générateur de chaleur (30),
au moins un capteur de température (40) pour la détermination de la température réelle du local dans le local à chauffer (100), et
un dispositif de régulation (20) pour la régulation de la température d'entrée du système de chauffage ou du générateur de chaleur (30), qui est conçu pour la mise en oeuvre d'un procédé présentant les caractéristiques d'une des revendications 1 à 5.

7. Système de chauffage (10) selon la revendication 6, **caractérisé en ce que**, après la reconnaissance de l'ouverture de fenêtre dans le local à chauffer (100), le dispositif de régulation (20) utilise la température réelle du local déterminée pour la dernière fois avant la reconnaissance de l'ouverture de fenêtre pour prédéfinir la température d'entrée du système de chauffage ou du générateur de chaleur (30) ou réduit la température d'entrée pour un corps chauffant (50) ou déplace le générateur de chaleur (30) dans un mode de fonctionnement passif.

8. Système de chauffage (10) selon l'une des revendications 6 ou 7, **caractérisé en ce que**, après la reconnaissance de l'ouverture de fenêtre dans le local à chauffer (100), on surveille encore l'évolution de la température réelle du local ainsi que le gradient correspondant et le dispositif de régulation (20) utilise de nouveau la température réelle actuelle du local dans le local à chauffer (100) pour la régulation de la température d'entrée du système de chauffage ou du générateur de chaleur (30), dès que le gradient a encore augmenté après la fermeture de fenêtre reconnue et est ensuite de nouveau descendu en dessous d'une troisième valeur limite prédéfinie.
